# EUROPEAN PATENT APPLICATION

(11) **EP 4 478 000 A1**
(43) Date of publication of application: **18.12.2024**
(21) Application number: 23178864.7
(22) Date of filing: 13.06.2023
(51) Int. Cl.: G01D 4/00

(54) **MEASUREMENT MODULE FOR ANALOG METER READOUT**

(71) Applicant: Waltero Holding AB, 223 63 Lund (SE)
(72) Inventor: Storm, Kristian, 24562 Hjärup (SE); Lindoff, Bengt, 237 35 Bjärred (SE)
(74) Representative: Invent Horizon IP

(57) **Abstract**

A measurement module (130) for determining a measurement readout of an analog meter display (122) comprises a camera (132) for taking at least one image of the analog meter display, a communication unit (140) for transmitting a representation of the image(s) to a remote server (150) and receiving reconfiguration information, and an image recognition unit (138) for obtaining at least one measurement readout from the image(s) of the analog meter display. The measurement module operates to take at least one image of the analog meter display with the camera, transmit a representation of the image(s) to the remote server with the communication unit, receive reconfiguration information from the remote server with the communication unit, configure the measurement module to be in an operational state based on the received reconfiguration information, and obtain at least one measurement readout from the image(s) of the analog meter display with the image recognition unit when in the operational state.

## Description

### TECHNICAL FIELD

The technology relates to the field of remote monitoring and measurement of analog meters, specifically in the context of utility meters such as electric power, water, gas, and other metered lines. This field involves the use of image recognition, communication protocols, and control systems to facilitate accurate and efficient data collection and analysis for various applications.

### BACKGROUND

The field of the invention relates generally to the monitoring and measurement of utility consumption, such as water, gas, and electricity, and more specifically to the digitalization and remote monitoring of analog meters used for measuring the consumption of these utilities.

Analog meters are widely used worldwide for measuring the consumption of utilities such as water, gas, and electricity. These meters typically display the consumption data using analog numbers and/or needle gauges which are not connected to the internet. As a result, the collection of consumption data from these meters must be done manually, which is associated with significant costs, inefficiencies and complexity. Furthermore, manual data collection is often performed infrequently, such as on a yearly or monthly basis, which may not provide timely and accurate information on utility consumption.

To address the limitations of manual data collection, various solutions have been proposed to connect analog meters to the internet for remote monitoring and data collection. One such solution involves attaching a battery-driven measurement module to the analog meter, which includes a communication unit, a camera, and a processor with image recognition capabilities. The measurement module captures images of the analog meter display and processes the images to obtain digital consumption data, which can then be transmitted to a remote server for further analysis and monitoring.

However, there are several challenges associated with the implementation of such measurement modules. First, the battery life of the measurement module is of critical importance, as frequent battery replacement would be costly and inconvenient. Therefore, it is essential to minimize the power consumption of the measurement module, particularly in terms of signal processing and communication.

Second, there is a wide variety of analog meter designs, with different positions for the analog numbers or needle gauges on the display. This variability makes it difficult to standardize the configuration process for the measurement module, as the image recognition algorithms must be able to accurately identify and process the consumption data from different types of analog meters.

One approach to address this challenge is to manually configure each measurement module for the specific type of analog meter it will be attached to. However, this manual configuration process is time-consuming, costly, and prone to human errors. Alternatively, advanced machine learning algorithms and training can be implemented in the measurement module to automatically recognize and process the consumption data from different types of analog meters. However, this approach requires high processing power, which may negatively impact the battery life of the measurement module, or may require additional training data to accurately process images.

Therefore, there is a need for improved methods and apparatus for digitalizing and remotely monitoring analog meters that can overcome the challenges associated with manual configuration, variability in meter designs, and battery life constraints.

### SUMMARY

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

The disclosure will now be described in more detail with reference to the accompanying drawings, in which:
Figure 1 shows a measurement module arranged to image an analog meter and connected to a remote server according to an example.
Figure 2 is a schematic diagram illustrating an example, where the remote server is connected to a plurality of measurement modules, attached to respective analog meters;
Figure 3 shows two types of analog meters according to an example;
Figure 4 shows a flow chart for measurement module operation according to an example;
Figure 5 shows a flow chart of a remote server operation according to an example.

### DETAILED DESCRIPTION

The detailed description set forth below provides information and examples of the disclosed technology with sufficient detail to enable those skilled in the art to practice the disclosure.

The present disclosure will now be described in detail with reference to example embodiments. It should be understood that these example embodiments are provided for illustrative purposes only and are not intended to limit the scope of the present disclosure.

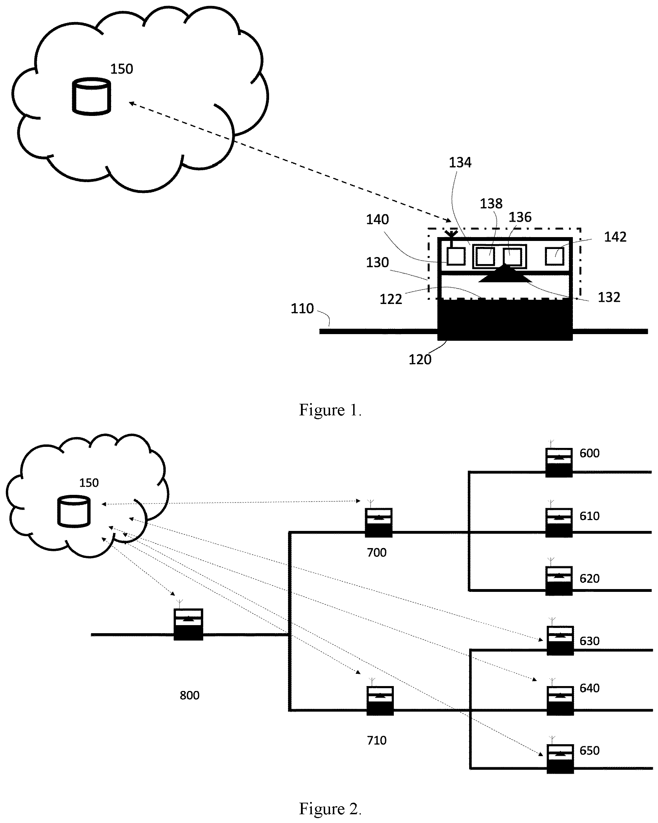

According to an embodiment shown in figure 1, a measurement module 130 is arranged to image an analog meter 120 and connected to a remote server 150. The measurement module 130 includes a camera 132, a communication unit 140, an image recognition unit 138, and a control unit 136. The camera 132 is configured to take at least one image of the analog meter display 122. The communication unit 140 is configured to transmit a representation of the image(s) to the remote server 150 and receive reconfiguration information. The image recognition unit 138 is configured to obtain at least one measurement readout from the image(s) of the analog meter display 122.

Referring to figure 2, a schematic diagram illustrates an example where the remote server 150 is connected to a plurality of measurement modules 130, 600, 610, 620, 630, 640, 650, 700, 710, 800, each attached to respective analog meters.

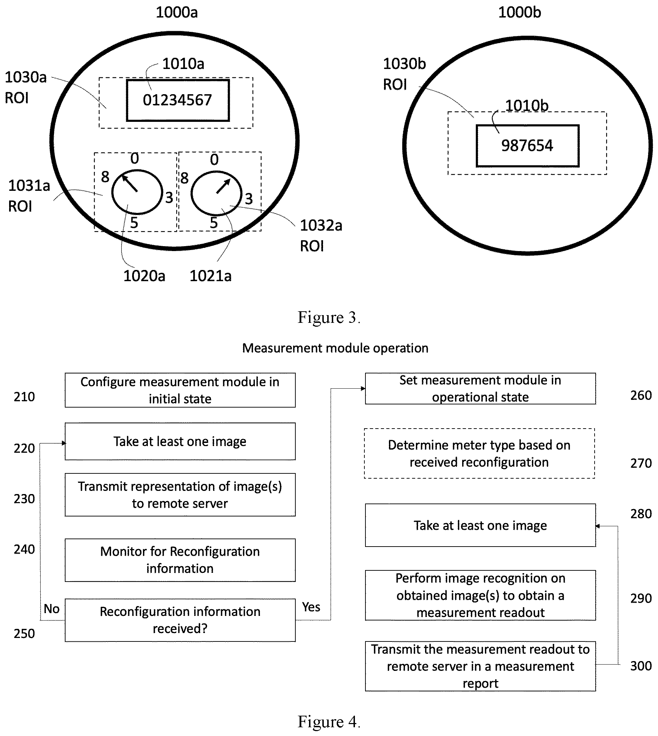

Figure 3 shows two types of analog meters 1000a and 1000b according to an example. Each analog meter type has different regions of interest (ROI) parameters 1030a, 1031a, 1032a, and 1030b corresponding to measurement readout positions 1010a, 1020a, 1021a, 1010b on the analog meter display 122.

In the embodiment shown in figure 4, a flow chart for measurement module operation is presented. The measurement module 130 operates in an initial state (step 210), where it takes at least one image of the analog meter display 122 with the camera 132 (step 220) and transmits a representation of the image(s) to the remote server 150 with the communication unit 140 (step 230). The measurement module 130 then monitors for reconfiguration information (step 240) and determines if reconfiguration information is received (step 250). If reconfiguration information is received, the measurement module 130 configures itself to be in an operational state (step 260).

In step 270, the measurement module 130 determines meter type based on the received reconfiguration information. Optionally, the reconfiguration information comprises information about ROI parameters for all determined analog meter types, and the measurement module first determines based on an image, and image recognition using the various ROI parameters (1030a, 1031a, 1032a, 1030b) which analog meter type (1000a, 1000b) the measurement module is attached to. In other embodiments, the reconfiguration information comprises only ROI parameters (1030a, 1031a, 1032a) for the specific analog meter type the measurement module (130) is attached to, i.e. the server node (150) has made the analog meter type detection.

When in the operational state, the measurement module 130 configures the camera 132 to take at least one more image of the analog meter display 122 (step 280), configures the image recognition unit 138 to obtain at least one measurement readouts from the one or more images (step 290), and configures the communication unit 140 to transmit the measurement readout to the remote server 150 in a measurement report (step 300).

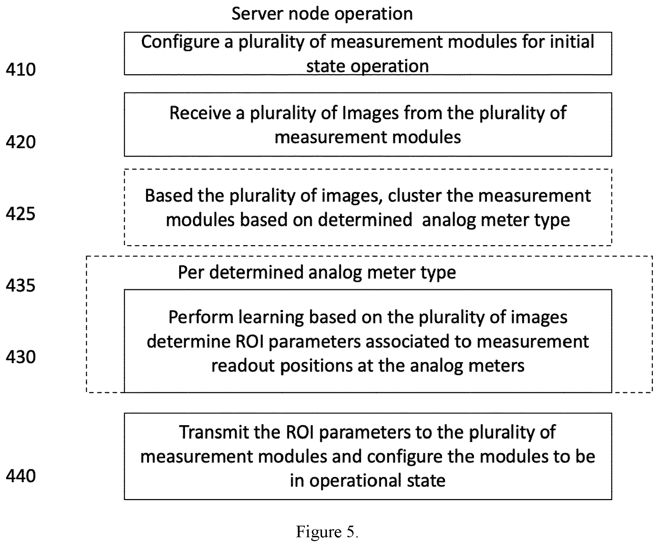

Figure 5 shows a flow chart of a remote server operation according to an example. The remote server 150 configures the plurality of measurement modules to operate in an initial state (step 410) and receives a plurality of images (or representation of images) from the plurality of measurement modules (step 420). Optionally, if measurement modules are attached to several different analog meter types, the remote server 150 determines the plurality of analog meter types based on learning from the plurality of images (step 425) and clusters the measurement modules to respective determined analog meter types. The remote server 150 then performs learning based on the plurality of images to determine regions of interest (ROI) parameters 1030a, 1031a, 1032a (step 430). Optionally, if several different analog meter types are determined, the ROI parameters are determined 1030a, 1031a, 1032a, 1030b for respective analog meter types (step 435). The remote server 150 transmits the determined reconfiguration information configuring the measurement modules to be in operational mode and reconfiguration information further comprising ROI parameters for the determined analog meter types (step 440).

In the example embodiments described above, the measurement module 130 and the remote server 150 cooperate to determine a measurement readout of an analog meter display 122. The measurement module 130 takes images of the analog meter display 122, transmits the images to the remote server 150, and receives reconfiguration information from the remote server 150. The remote server 150 processes the images, determines the regions of interest (ROI) parameters, and transmits the reconfiguration information to the measurement module 130. The measurement module 130 then operates in an operational state, obtaining a measurement readout from the images of the analog meter display 122 using the image recognition unit 138 and transmitting the measurement readout to the remote server 150 in a measurement report.

### 1. Measurement Module Configuration and Components

In one example, the measurement module 130 is designed to determine a measurement readout of an analog meter display 122. The measurement module 130 comprises various components, including a camera 132, a communication unit 140, an image recognition unit 138, and a control unit 136. These components work together to capture images of the analog meter display 122, analyze the images, and obtain at least one measurement readout. The measurement module 130 may also include additional optional components to enhance its functionality and performance.

### 1.1. Camera for Capturing Analog Meter Display Images

In some examples, the camera 132 is configured to take at least one image of the analog meter display 122. The camera 132 may be a digital camera capable of capturing high- or medium resolution images of the analog meter display 122. The camera 132 may be equipped with various features, such as adjustable focus, zoom, and exposure settings, to optimize the image quality for different lighting conditions and contrast levels of the analog meter display 122. In some embodiments, the camera 132 may also be configured to take multiple images of the analog meter display 122 to identify regions of interest of the analog meter display 122.

### 1.2. Communication Unit for Transmitting and Receiving Data

In some examples, the communication unit 140 is configured to transmit a representation of the image(s) captured by the camera 132 to a remote server 150 and receive reconfiguration information from the remote server 150. The communication unit 140 may support various wireless communication protocols, such as WLAN, Bluetooth, LoRa, NB-IoT, LTE Cat M, 2G, 3G, 4G, and 5G, to enable efficient and reliable data transmission between the measurement module 130 and the remote server 150. The communication unit 140 may also include additional optional features, such as data encryption and authentication, to ensure secure communication between the measurement module 130 and the remote server 150.

### 1.3. Image Recognition Unit for Analyzing Images and Obtaining Measurement Readouts

In some examples, the image recognition unit 138 is configured to obtain at least one measurement readout from the image(s) of the analog meter display 122. The image recognition unit 138 may comprise a software module that uses various image processing and analysis techniques to extract the measurement readout from the captured image(s). These techniques may include machine learning, optical character recognition, measuring the angle and position of a needle gauge, edge detection algorithms, segmenting the image into individual digits or characters, pattern recognition algorithms, and analyzing the color and intensity of the display. The image recognition unit 138 may be configured to use region of interest (ROI) parameters 1030a, 1031a, 1032a, 1030b received in the reconfiguration information to set regions of interest in the image(s) of the analog meter display 122. The reconfiguration may also include parameters necessary to extract data from the regions of interest (ROI) parameters.

### 1.4. Control Unit for Managing Component Operations

In some examples, the control unit 136 is connected to the camera 132, communication unit 140, and image recognition unit 138. The control unit 136 manages the communication and operation of these components for analog meter measurement determination. The control unit 136 may be responsible for coordinating the various tasks performed by the measurement module 130, such as capturing images of the analog meter display 122, transmitting image representations to the remote server 150, receiving reconfiguration information, and configuring the measurement module 130 to be in an operational state based on the received reconfiguration information. In some embodiments, the control unit 136 may also be responsible for managing the power consumption of the measurement module 130, such as by controlling a battery 142 that powers the measurement module 130.

### 2. Analog Meter Types and Regions of Interest (ROI) Parameters

In one example, the measurement module 130 is designed to work with various types of analog meters 120, such as electric power meters, water meters, gas meters, temperature sensors, gas pressure meters, and other types of meters that have an analog meter display 122. The analog meter display 122 may include different types of measurement readouts, such as numbers, gauge, needle dial, rolling counter, liquid crystal display, or other types of readouts that provide a visual representation of the measurement value.

### 2.1. Different Analog Meter Types and Their Displays

In some examples, the measurement module 130 is configured to work with different types of analog meters 1000a, 1000b, each having a unique analog meter display 122. The analog meter display 122 may have different regions of interest (ROI) parameters 1030a, 1031a, 1032a, 1030b corresponding to measurement readout positions 1010a, 1020a, 1021a, 1010b on the analog meter display 122. These regions of interest (ROI) parameters are used by the image recognition unit 138 to analyze the images taken by the camera 132 and obtain at least one measurement readout of the analog meter display 122.

### 2.2. Determining ROI Parameters for Each Analog Meter Type

In some examples, the remote server 150 is configured to perform learning based on the plurality of representation of images received from the measurement modules 130, 600, 610, 620, 630, 640, 650, 700, 710, 800 to determine region of interest (ROI) parameters 1030a, 1031a, 1032a, 1030b for the analog meter display 122. The learning process may involve analyzing the images, identifying the unique features of each analog meter type, and determining the appropriate ROI parameters for each type. This allows the remote server 150 to configure the measurement modules 130 to accurately obtain measurement readouts from the analog meter display 122.

### 2.3. Clustering Measurement Modules Based on Analog Meter Types

In some examples, the remote server 150 is configured to cluster the measurement modules 130, 600, 610, 620, 630, 640, 650, 700, 710, 800 to respectively determine analog meter types 1000a, 1000b based on the plurality of images received from the measurement modules. This clustering process allows the remote server 150 to group the measurement modules according to the type of analog meter they are attached to, which can help improve the efficiency and accuracy of the measurement readout determination process.

The advantages of determining ROI parameters for each analog meter type and clustering measurement modules based on analog meter types include improved accuracy in obtaining measurement readouts, better adaptability to different types of analog meters, and more efficient processing of images for determining measurement readouts by the measurement module 130

.

### 3. Operational States and Processes of the Measurement Module

In one example, the measurement module 130 operates in different states, such as an initial state and an operational state, to efficiently determine a measurement readout of an analog meter display 122. The operational states and processes of the measurement module 130 are described in detail in the following subsections.

### 3.1. Initial State for Imaging and Learning Analog Meter Display

In some examples, the measurement module 130 operates in an initial state (step 210) to capture at least one image of the analog meter display 122 using the camera 132 (step 220) and transmit, using the communication unit 140 a representation of at least one image to the remote server 150. The initial state may be configured by the remote server 150 or may be pre-configured in the measurement module 130 at power on. During the initial state, the measurement module 130 may also adjust the camera settings to optimize for the lighting conditions and contrast of the analog meter display 122. This allows the measurement module 130 to capture high-quality images of the analog meter display 122, which can be used by the remote server 150 for learning and recognizing the analog meter type and its regions of interest (ROI).

### 3.2. Operational State for Reading and Reporting Analog Meter Measurements

In some examples, after receiving reconfiguration information from the remote server 150 (step 250), the measurement module 130 configures itself to be in an operational state (step 260). In the operational state, the measurement module 130 determines the meter type based on the received reconfiguration information (step 270) and configures the camera 132 to take at least one more image of the analog meter display 122 (step 280). The measurement module 130 may also configure the image recognition unit 138 to obtain at least one measurement readout using the received reconfiguration information, which may comprise region of interest (ROI) parameters (step 290). The region of interest (ROI) parameters allows the measurement module 130 to efficiently obtain measurement readouts from the analog meter display 122 and transmit the measurement readout to the remote server 150 in a measurement report (step 300).

The operational state provides several advantages, such as reducing the processing load on the measurement module 130 by only analyzing images when in the operational state and improving the accuracy of measurement readouts by using the learned ROI parameters.

### 3.3. Periodic Operation and Configuration by Remote Server

In some examples, the measurement module 130 operates periodically, with the period being configured by the remote server 150 or pre-determined. This periodic operation allows the measurement module 130 to efficiently capture images of the analog meter display 122 and obtain measurement readouts at regular intervals. Examples of such regular interval may be every minute, hour, day, or month dependent on application. The periodic operation also enables the remote server 150 to receive updated measurement readouts from the measurement module 130 and analyze the measurement reports for further processing and analysis.

During the periodic operation, the measurement module 130 may transition between the initial state and the operational state based on the received reconfiguration information from the remote server 150. This allows the measurement module 130 to adapt to changes in the analog meter display 122 or its environment, ensuring accurate measurement readouts and efficient operation.

### 4. Remote Server Functions and Learning Process

In one example, the remote server 150 is responsible for configuring the measurement modules 130, receiving image representations from the measurement modules, determining analog meter types, clustering measurement modules based on analog meter types, learning regions of interest (ROI) parameters based on image representations, and transmitting reconfiguration information to the measurement modules.

### 4.1. Configuring Measurement Modules and Receiving Image Representations

In some examples, the remote server 150 configures the plurality of measurement modules 130 to operate in an initial state (step 410). The remote server 150 receives a plurality of images or representations of images (such as compressed digital representations of the images, i.e, jpeg, png, gif etc.) from the plurality of measurement modules (step 420). The remote server 150 may process the received images to determine the analog meter types and regions of interest (ROI) parameters for each analog meter type.

### 4.2. Determining Analog Meter Types and Clustering Measurement Modules

In one example, the remote server 150 determines the plurality of analog meter types based on learning from the plurality of images (step 425). The remote server 150 may cluster the measurement modules 130 to respective determined analog meter types (1000a, 1000b) based on the plurality of images. This clustering allows the remote server 150 to efficiently manage and process the measurement modules based on their respective analog meter types.

### 4.3. Learning ROI Parameters Based on Image Representations

In some examples, the remote server 150 performs learning based on the plurality of image representations to determine regions of interest (ROI) parameters (1030a, 1031a, 1032a, 1030b) for the analog meter display 122 (step 430). Optionally, if several different analog meter types are determined, the ROI parameters are determined (1030a, 1031a, 1032a, 1030b) for respective analog meter types (step 435). The remote server 150 may use machine learning algorithms or other image processing techniques to identify the regions of interest in the images and determine the ROI parameters for each analog meter type. In other examples human assisted learning may be used to determine the ROI parameters.

The learning process performed by the remote server 150 provides several advantages. By determining respective ROI parameters for respective analog meter type based on the received image representations, the remote server 150 can adapt to various analog meter types and their respective display configurations. This adaptability allows the measurement module 130 to be used with a wide range of analog meters without requiring manual pre-configuration or calibration. Additionally, the learning process enables the remote server 150 to improve the accuracy and reliability of the measurement readouts obtained from the measurement modules 130.

### 5. Reconfiguration Information and Measurement Module Adaptation

### 5.1. Transmitting Reconfiguration Information from Remote Server to Measurement Module

In one example, the remote server 150 transmits the determined reconfiguration information configuring the measurement modules 130 to be in operational mode and reconfiguration information further comprising ROI parameters for the determined analog meter types (step 440). The reconfiguration information may include information about the determined analog meter types, the ROI parameters for each analog meter type, parameters necessary to extract data from the ROIs, and any other necessary configuration data such as the periodicity of taking images with the camera 132 of the analog display and performing measurement readouts using the image recognition unit 138.

### 5.2. Configuring Measurement Module Based on Received Reconfiguration Information

In some examples, the measurement module 130 receives the reconfiguration information from the remote server 150 with the communication unit 140 and configures itself to be in an operational state based on the received reconfiguration information (step 250). The measurement module 130 may determine the meter type based on the received reconfiguration information (step 270) and configure the image recognition unit 138 accordingly.

### 5.3. Determining Meter Type and Configuring Image Recognition Unit for Measurement Readout

In one example, the measurement module 130 determines the meter type based on the received reconfiguration information and configures the image recognition unit 138 to obtain at least one measurement readout (step 290). The image recognition unit 138 may use the ROI parameters (1030a, 1031a, 1032a, 1030b) received in the reconfiguration information to set regions of interest in the image(s) of the analog meter display 122. The image recognition unit 138 may comprise various image processing techniques, such as machine learning, optical character recognition, edge detection algorithms, pattern recognition algorithms, or color and intensity analysis, to generate the measurement readout from the regions of interest.

The adaptation of the measurement module 130 based on the received reconfiguration information allows the measurement module to accurately and reliably obtain measurement readouts from various analog meter types. This adaptability enables the measurement module 130 to be used with a wide range of analog meters without requiring manual pre-configuration or calibration.

### 6. Remote Server Processing and Analysis of Measurement Reports

In some examples, the remote server 150 receives the measurement reports from the measurement module 130 and processes the received measurement readouts. The remote server 150 may analyze the measurement readouts to determine consumption, trends, detect anomalies, or perform any other relevant analysis.

The remote server 150 may also use the received measurement reports to update the configuration of the measurement module 130, adjust the ROI parameters, or modify the image recognition parameters. This allows the remote server 150 to adapt the measurement module 130 to changes in the analog meter display 122 or the environment, ensuring accurate and reliable measurement readouts.

In some examples, the remote server 150 may be connected to a plurality of measurement modules 130, 600, 610, 620, 630, 640, 650, 700, 710, 800, each attached to respective analog meters. The remote server 150 may process and analyze the measurement reports from all connected measurement modules, enabling centralized monitoring and management of multiple analog meters.

The measurement reporting and communication with the remote server provide several advantages. By obtaining measurement readouts in the operational state and transmitting them to the remote server, the measurement module 130 can provide real-time monitoring of the analog meter display 122. The remote server 150 can process and analyze the measurement reports, enabling efficient management and analysis of multiple analog meters. Additionally, the remote server 150 can adapt the measurement module 130 based on the received measurement reports, ensuring accurate and reliable measurement readouts.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A measurement module (130) for determining a measurement readout of an analog meter display (122), the measurement module comprising:
a camera (132) configured to take at least one image of the analog meter display (122);
a communication unit (140) configured to transmit a representation of the image(s) to a remote server (150) and receive reconfiguration information;
an image recognition unit (138) configured to obtain at least one measurement readout from the image(s) of the analog meter display (122); and
wherein the measurement module (130) is configured to operate to:
take at least one image of the analog meter display (122) with the camera (132);
transmit a representation of the image(s) to the remote server (150) with the communication unit (140);
receive reconfiguration information from the remote server (150) with the communication unit (140);
configure the measurement module (130) to be in an operational state based on the received reconfiguration information; and
obtain at least one measurement readout from the image(s) of the analog meter display (122) with the image recognition unit (138) when in the operational state.

2. The measurement module (130) according to claim 1, wherein the reconfiguration information comprises region of interest (ROI) parameters (1030a, 1031a, 1032a, 1030b) for the analog meter display (122).

3. The measurement module (130) according to claim 2, wherein the image recognition unit (138) is configured to use the ROI parameters (1030a, 1031a, 1032a, 1030b) to set regions of interest in the image(s) of the analog meter display (122).

4. The measurement module (130) according to any of claims 1 to 3, wherein the communication unit (140) is configured to transmit the measurement readout to the remote server (150) in a measurement report.

5. The measurement module (130) according to any of claims 1 to 4, wherein the camera (132) is configured to take multiple images of the analog meter display (122) to identify regions of interest of the analog meter display (122).

6. The measurement module (130) according to any of claims 1 to 5, wherein the measurement module (130) is configured to operate periodically, and the period may be configured by the remote server (150) or pre-determined.

7. A system for determining a measurement readout of an analog meter display (122), the system comprising:
At least one measurement module (130) according to any of claims 1 to 6; and
a remote server (150) configured to receive a representation of the image(s) from the measurement module (130) and transmit reconfiguration information to the measurement module (130).

8. The system according to claim 7, wherein the remote server (150) is configured to perform learning based on the plurality of representation of images to determine region of interest (ROI) parameters (1030a, 1031a, 1032a, 1030b) for the analog meter display (122).

9. The system according to claim 8, wherein the remote server (150) is configured to cluster the measurement modules (130) to respective determined analog meter types (1000a, 1000b) based on the plurality of images.

10. A method for determining a measurement readout of an analog meter display (122) using a measurement module (130), the method comprising:
taking at least one image of the analog meter display (122) with a camera (132) of the measurement module (130);
transmitting a representation of the image(s) to a remote server (150) with a communication unit (140) of the measurement module (130);
receiving reconfiguration information from the remote server (150) with the communication unit (140) of the measurement module (130);
configuring the measurement module (130) to be in an operational state based on the received reconfiguration information; and
obtaining a measurement readout from the image(s) of the analog meter display (122) with an image recognition unit (138) of the measurement module (130) when in the operational state.

11. The method according to claim 10, further comprising using region of interest (ROI) parameters (1030a, 1031a, 1032a, 1030b) received in the reconfiguration information to set regions of interest in the image(s) of the analog meter display (122) with the image recognition unit (138).

12. The method according to any of claims 10 to 11, further comprising transmitting the measurement readout to the remote server (150) in a measurement report with the communication unit (140) of the measurement module (130).

13. The method according to any of claims 10 to 12, further comprising taking multiple images of the analog meter display (122) with the camera (132) of the measurement module (130) to identify regions of interest of the analog meter display (122).

14. The method according to any of claims 10 to 13, further comprising operating the measurement module (130) periodically, wherein the period may be configured by the remote server (150) or pre-determined.

15. A computer program product comprising computer-readable instructions that, when executed by a processor, cause the processor to perform the method according to any of claims 10 to 14.
